# EUROPEAN PATENT APPLICATION

(11) **EP 3 372 130 A1**
(43) Date of publication of application: **12.09.2018**
(21) Application number: 17159515.0
(22) Date of filing: 07.03.2017
(51) Int. Cl.: A47J 42/04, A47J 42/08

(54) **PEPPER MILL**

(71) Applicant: Cheng, Mi-Ci, Tainan City 709 (TW)
(72) Inventor: Cheng, Mi-Ci, Tainan City 709 (TW)
(74) Representative: Casalonga

(57) **Abstract**

A grinding device includes a body (1) and a driving member (2) which has a restriction face. A fixing member (3) is fixed in the body and has a skirt which includes a shoulder on which a resilient member (4) is connected. The resilient member contacts the restriction face. A first connection portion is formed inside the skirt. A driven member (5) is driven by the driving member and has a second connection portion which is connected to the first connection portion. The driven member has least one first grinding member (6). A shaft (7) has a second grinding member which is located corresponding to the first grinding member, and a gap is formed between the first and second grinding members. The gap is adjusted by rotating the driving member. The resilient member increases friction between the shoulder and the restriction face to prevent the driving member from unexpected rotation to change the gap.

## Description

### BACKGROUND OF THE INVENTION

### 1. Fields of the invention

The present invention relates to a grinding device, and more particularly, to a grinding device that is able to grind spice particles into different sizes, and requires less number of parts so as to reduce manufacturing cost and time required.

### 2. Descriptions of Related Art

The conventional grinding devices are designed to grind spices such as pepper, sea salt and alike, the sizes that the spices are ground are expected to be suitable for seasoning food. There are many different types of grinding devices in the market, and some of which are able to grind the spices into desired sizes.

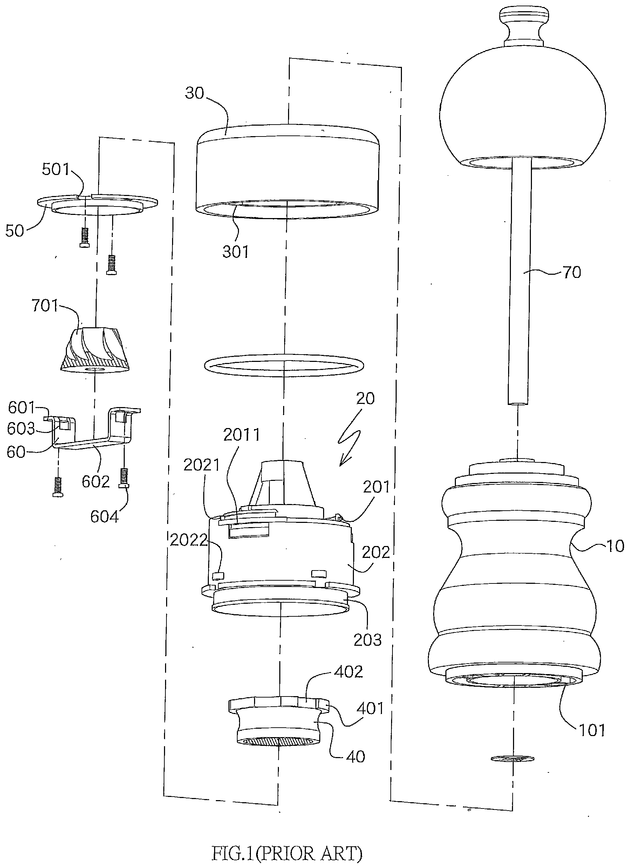

Fig. 1 shows one of the grinding devices and comprises a body 10 having a connection portion 101 connected thereto. An adjustable member 20 has a connection member 201, a top adjustment member 202 and a bottom adjustment member 203. The connection member 201 is connected between the connection portion 101 and the bottom adjustment member 203. The top and bottom adjustment members 202, 203 are threadedly connected to each other, such that when the top adjustment member 202 is rotated relative to the connection member 201, the distance between the top and bottom adjustment members 202, 203 is adjustable so as to control the length of the adjustable member 20. The connection member 201 includes a slide 2011 and the top adjustment member 202 has a slot 2021 in which the slide 2011 is movably received. The slide 2011 is restricted by the slot 2021 to prevent the bottom adjustment member 203 from dropping from the top adjustment member 202. The bottom adjustment member 203 further includes threaded holes.

A rotary member 30 is mounted to the top adjustment member 202 and includes a groove 301. The top adjustment member 202 includes a boss 2022 which is able to slide in the groove 301. When rotating the rotary member 30, the top adjustment member 202 is rotated.

A first grinding member 40 is located at the lower end of the bottom adjustment member 203 and includes a flange 401 extending radially therefrom. The flange 401 has at least one fixing portion 402 which is located corresponding to the threaded hole.

A ring 50 is mounted to the first grinding member 40 and contacts the flange 401. The ring 50 includes two locking holes 501 which are located corresponding to the threaded holes.

A plate 60 includes two positioning portions 601 and a bridge 602 connected between the positioning portions 601. The bridge 602 is shaped to brace the first grinding member 40. The plate 60 includes holes 603 located corresponding to the locking holes 501. Bolts 604 extend through the holes 603 and are connected to the locking holes 501.

A shaft 70 rotatably extends through the body 10 and includes a second grinding member 701 which is located corresponding to the first grinding member 40. A gap is defined between the first and second grinding members 40, 701.

When rotating the rotary member 30, the top adjustment member 202 is rotated relative to the connection member 210 and the bottom adjustment member 203, such that the bottom adjustment member 203 together with the first grinding member 40, the ring 50 and the plate 60 are moved up or down. The gap between the first and second grinding members 40, 701 is then adjusted to grind the spices into particles of desired sizes.

However, the conventional grinding devices involve too many parts and some of which have complicated shapes which are difficult to manufacture, and high manufacturing cost and time are required. For example, the adjustment member 20, the connection member 201, the top adjustment member 202 and the bottom adjustment member 203 have complicated shapes and required a lot of time to manufacture and assemble, and this further increases the manufacturing cost. Besides, once the adjustable member 20 is assembled, it is difficult to be dis-assembled and this cause problems for maintenance. The whole adjustable member 20 has to be replaced if problem such as wearing is happened.

Because the top adjustment member 202 and the bottom adjustment member 203 are threadedly connected to each other, so that when the top adjustment member 202 and the bottom adjustment member 203 are not yet completely connected to each other and the gap between the first and second grinding members 40, 701 is still too wide, the bottom adjustment member 203 tends to shank and unstable, and the users may feel uncomfortable when using the grinding devices. The unstable bottom adjustment member 203 can easily damage the threads between the top adjustment member 202 and the bottom adjustment member 203. The top adjustment member 202 may contact and rotate the rotary member 30 after adjusting the gap, such that the gap is changed again. There is friction between the first and second grinding members 40, 701, and the friction drives the bottom grinding member 203 via the first grinding member 40, and this changes the gap again.

The present invention intends to provide a grinding device to eliminate the shortcomings mentioned above.

### SUMMARY OF THE INVENTION

The present invention relates to a grinding device and comprises a body having a path defined axially therethrough, and a driving member having a hole defined in the first end thereof. A flange extends inward from the inner periphery of the hole and has a restriction face. At least one driving portion is formed in the inner periphery of the second end of the driving member. A fixing member is fixed in the body and has at least one aperture which communicates with the path. The fixing member has a skirt which is located in the hole. A shoulder is formed on the top of the skirt and has a resilient member connected thereto, wherein the resilient member generates resilient force in the axial direction thereof and contacts the restriction face. A first connection portion is formed in the inner periphery of the skirt.

A driven member has a receiving hole defined therethrough. A second connection portion and an engaging portion are respectively formed on the outside of the driven member. The second connection portion is connected to the first connection portion. The engaging portion is engaged with the at least one driving portion. At least one first grinding member is located in the driven member. A shaft extends through the path, the hole, the aperture and the receiving hole, and a second grinding member is connected to the first end of the shaft which is located corresponding to the at least one first grinding member. A gap is defined between the at least one first grinding member and the second grinding member. When the driving member is rotated, the driven member is co-rotated with the driving member to adjust a distance between the first and second connection members and to adjust the gap between the at least one first grinding member and the second grinding member.

Preferably, the resilient member includes at least one rib which is formed with the shoulder and made by resilient material.

Preferably, the skirt has at least one slot defined therethrough which is located corresponding to the at least one rib. The skirt is made by resilient material.

Preferably the restriction face includes multiple teeth, and the at least one rib is engaged with the teeth. The at least one rib has two inclined faces which extend outward from a peak of the at least one rib.

Preferably, the inner diameter of the path is smaller than the hole of the driving member. The outer periphery of the fixing member is engaged with the inside of the path.

Preferably, the fixing member is fixed to the inside of the path by way of heat melting.

Preferably, the fixing member has an arm, and a tube is connected to the arm and has a passage through which the shaft rotatably extends.

Preferably, the second grinding member contacts one end of the tube.

Preferably, the driving portion includes multiple faces to form a polygonal recess. The engaging portion is shaped to be engaged with the driving portion.

Preferably, the length of each of the faces of the driving portion is longer than the thickness of the engaging portion.

Preferably, the first and second connection members are threadedly connected to each other.

Preferably, the shaft has a knob connected to the second end thereof, and the knob is located on one end of the body.

The advantages of the present invention are that the number parts required for the grinding device of the present invention is less than that of the conventional grinding device. The sizes of the particles to be ground can be set according needs. The manufacturing cost and the time required are significantly reduced.

When adjusting the distance between the first and second grinding members, the gap is adjusted. The at least one rib of the resilient member slidably contacts the teeth of the restriction face to provide better operation feature. After the gap is set, the driving member does not rotate by unexpected touch to the driving member. Besides, when rotating the shaft to grind, the torque generated by the friction between the first and second grinding members and the particles to be ground cannot overcome the resilient force of the resilient member and the friction between the resilient member and the teeth to rotate the driving member. Therefore, the gap does not change during grinding.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view of the conventional grinding device;
Fig. 2 is a perspective view to show the grinding device of the present invention;
Fig. 3 is an exploded view of the grinding device of the present invention;
Fig. 4 is another perspective view of the driving member of the grinding device of the present invention;
Fig. 5 is another perspective view of the fixing member of the grinding device of the present invention;
Fig. 6 is another perspective view of the driven member of the grinding device of the present invention;
Fig. 7 is a cross sectional view of the grinding device of the present invention, wherein the gap is small;
Fig. 8 is a bottom view of the grinding device of the present invention;
Fig. 9 is a cross sectional view of the grinding device of the present invention, wherein the gap is large;
Fig. 10 shows that when the driving member is rotated, the ribs and the slots are compressed by the teeth, and
Fig. 11 shows that when the driving member is rotated, the ribs are located between the teeth.

### DETAILED DESCRIPTION OF THE PREFERRED EMBODIMENT

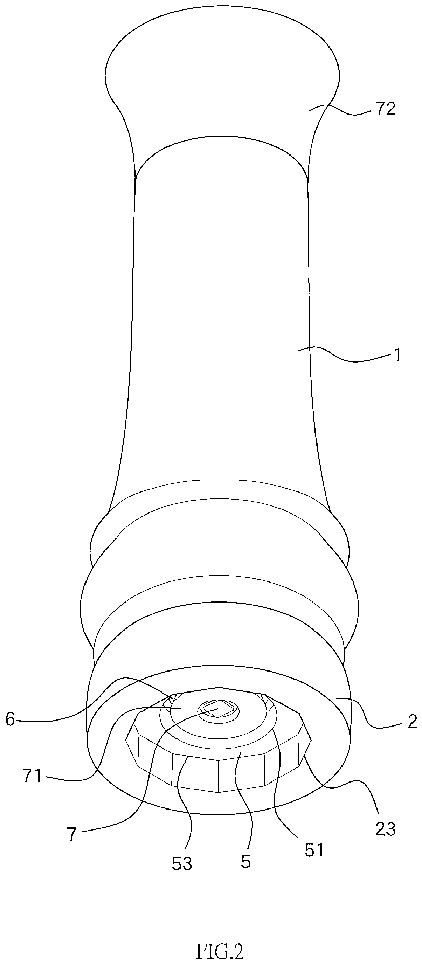

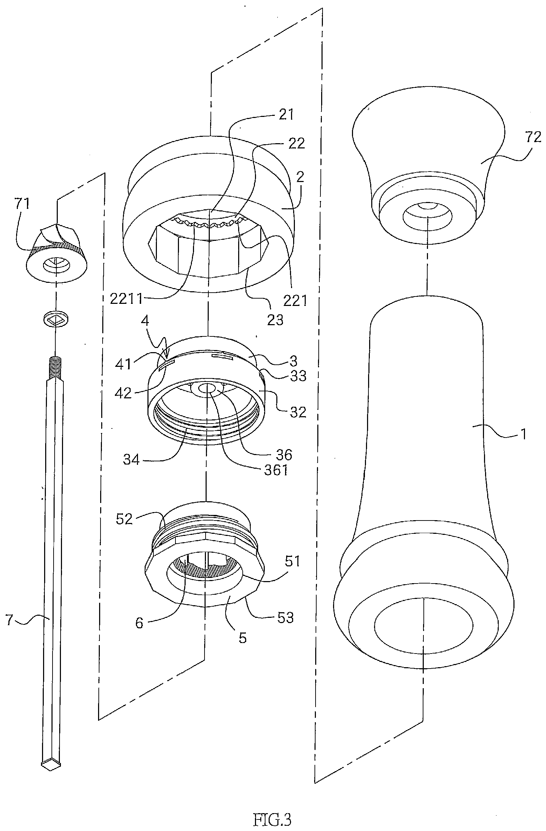

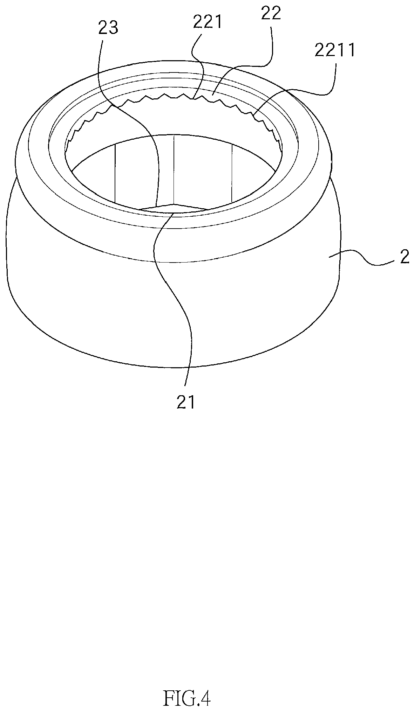

Referring to Figs. 2 to 7, the grinding device of the present invention comprises a body 1 having a path 11 defined axially therethrough, and a driving member 2, as shown in Figs. 3-4, having a hole 21 defined in the first end thereof. A flange 22 extends inward from the inner periphery of the hole 21 and has a restriction face 221. At least one driving portion 23 is formed in the inner periphery of the second end of the driving member 2.

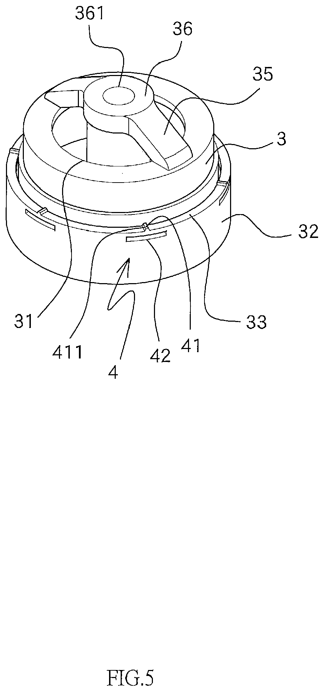

A fixing member 3, as shown in Figs. 3 and 5, is fixed in the body 1 and has at least one aperture 31 which communicates with the path 11. The fixing member 3 has a skirt 32 which is located in the hole 21. A shoulder 33 is formed on the top of the skirt 32 and has a resilient member 4 connected thereto, wherein the resilient member 4 generates resilient force in the axial direction thereof and contacts the restriction face 221 so as to create friction between the resilient member 4 and the restriction face 221. A first connection portion 34 is formed in the inner periphery of the skirt 32.

In one preferable embodiment, in order to further position the position of the driving member 2, the inner diameter of the path 11 is smaller than the hole 21 of the driving member 2. The fixing member 3 extends through the hole 21 from the second end of the driving member 2. The outer periphery of the fixing member 3 is engaged with an inside of the path 11. Preferably, the fixing member 3 is fixed to the inside of the path 11 by way of heat melting, such as ultra-sonic wave heat melting.

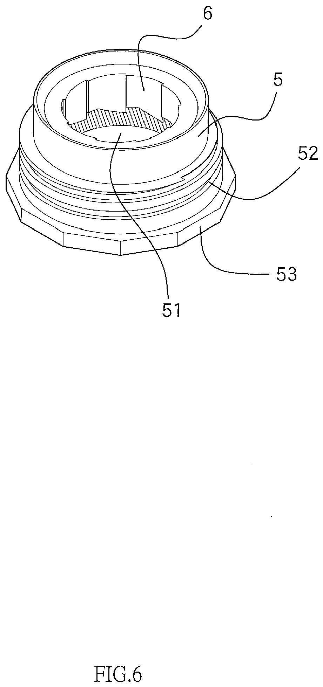

A driven member 5, as shown in Figs. 3 and 6, has a receiving hole 51 defined therethrough. A second connection portion 52 and an engaging portion 53 are respectively formed on the outside of the driven member 5. The second connection portion 52 is connected to the first connection portion 34. The engaging portion 53 is engaged with the at least one driving portion 23. At least one first grinding member 6 is located in the driven member 5. The driving portion 23 includes multiple faces to form a polygonal recess. The engaging portion 53 is shaped to be engaged with the driving portion 23. When the driving the driving member 2, the driven member 4 is co-rotated by the engagement of the engaging portion 53 and the driving portion 23.

In one preferable embodiment, the second connection portion 52 is connected to the first connection portion 34, the first and second connection members 34, 52 each have threads so that first and second connection members 34, 52 are threadedly connected to each other. This is just an example and not limited thereto. The relative positions between the driving portion 23 and the engaging portion 53 changes when the first and second connection members 34, 52 are threadedly moved relative to each other. In order to prevent the engaging portion 53 from disengaging from the driving portion 23, the length of each of the faces of the driving portion 23 is longer than the thickness of the engaging portion 53. This ensures that the driving portion 23 drives the engaging portion 53 regardless of the position that the engaging portion 53 is located relative to the driving portion 23.

A shaft 7 extends through the path 11, the hole 21, the aperture 31 and the receiving hole 51. A second grinding member 71 is connected to the first end of the shaft 7 which is located corresponding to the at least one first grinding member 6. A gap "D" is defined between the at least one first grinding member 6 and the second grinding member 71.

In one preferable embodiment, for positioning the shaft 7, the fixing member 3 has an arm 35, and a tube 36 is connected to the arm 35 and has a passage 361 through which the shaft 7 is rotatably extends. In one preferable embodiment, when the shaft 7 is connected to the second grinding member 71, the second grinding member 71 contacts one end of the tube 36.

In another preferable embodiment, in order to position the shaft 7 and to help the users to rotate the shaft 7, the shaft 7 has a knob 72 connected to the second end thereof, and the knob 72 is located on one end of the body 1.

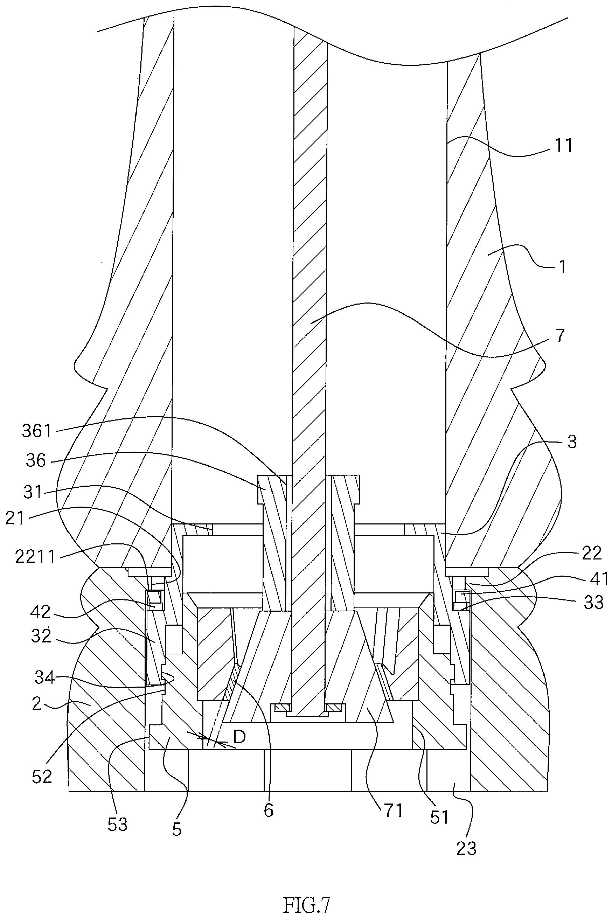

As shown in Fig. 7, after being assembled, the users can remove the shaft 7 by the knob 72, and put the spices (not shown) to be ground into the path 11 and drop into the gap "D" via the aperture 31. The shaft 7 is then inserted back to the body 1. The fixing member 3 is fixed to the path 11 of the body 1 and does not move. The second grinding member 71 contacts the tube 36 so that the second grinding member 71 is axially positioned and can only be rotated by rotating the shaft 7. As shown in Fig. 7, the first and second connection portions 34, 52 are not tightly locked to each other, so that the driven member 5 is moved away from the fixing member 3 by rotating the first and second connection portions 34, 52. The first grinding member 6 is positioned to the driven member 5 so that the first grinding member 6 moves toward the second grinding member 71. Therefore, the gap "D" is reduced. The users then rotate the knob 72 to drive the shaft 7 and the second grinding member 71. The spices are then ground between the first and second grinding members 6, 71. The particles of the spices are ground to be smaller than the gap "D", the particles drop from the gap "D".

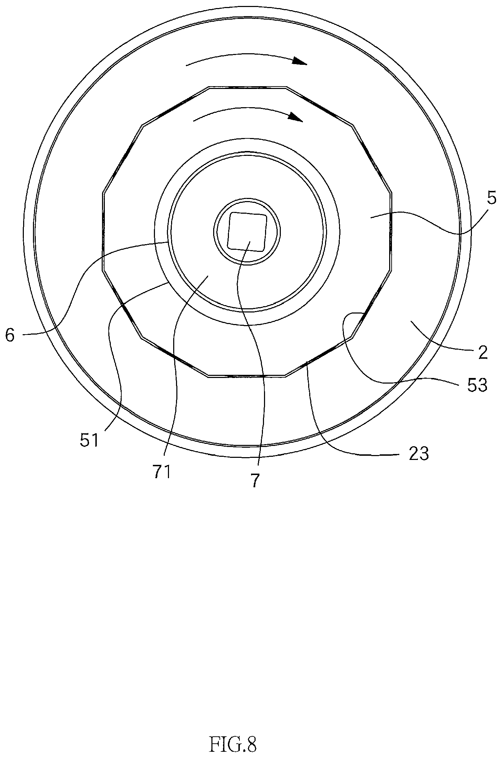

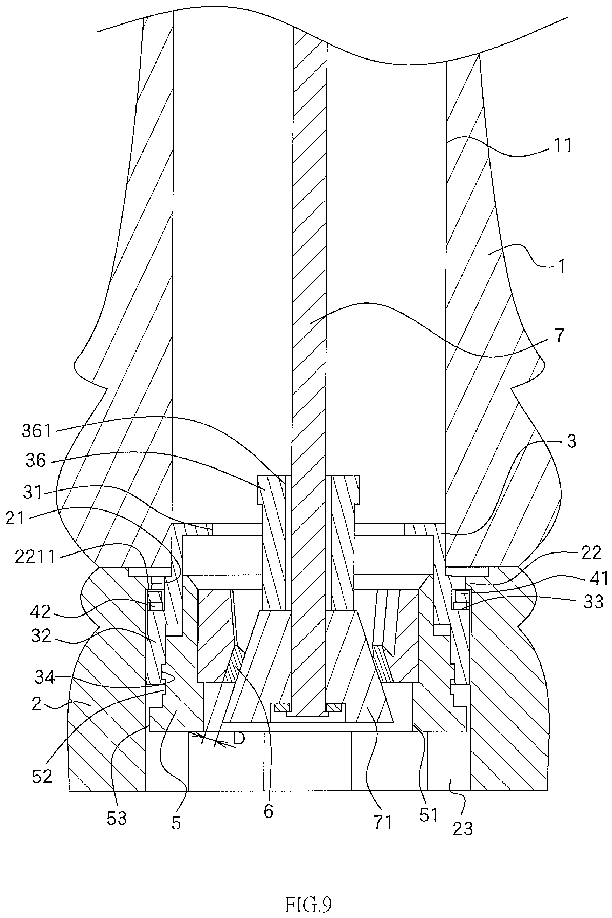

On the contrary, as shown in Figs. 8 and 9, when the users rotate the driving member 2 in the opposite direction as shown by the arrowhead in Fig. 8, the driving member 2 drives the driven member 5, and the first and second connection portions 34, 52 are connected to each other closer. The driven member 5 is moved toward the fixing member 3, so that the first grinding member 6 is moved away from the second grinding member 71, and the gap "D" is widened, such that larger particles are expected to be ground and the size of the particles can be controlled.

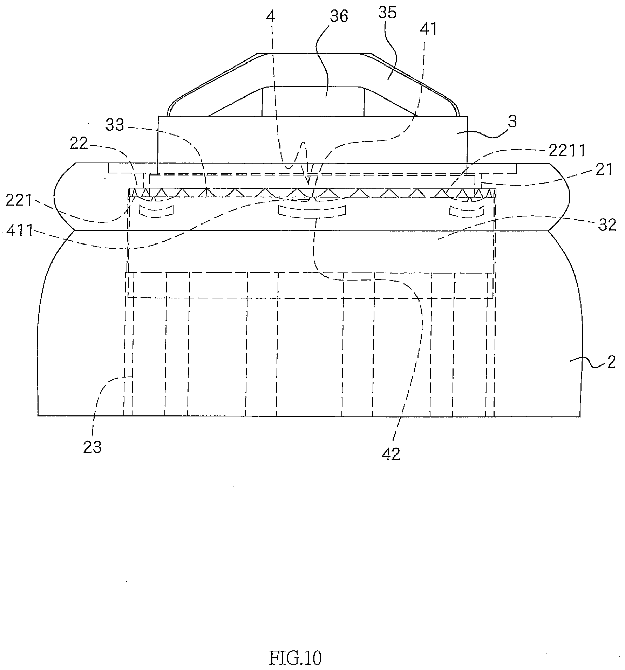

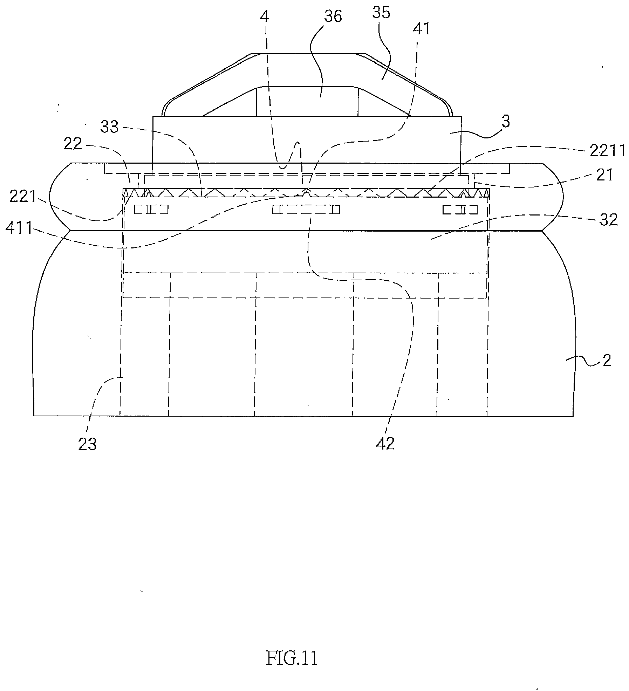

In order to prevent the driving member 2 from rotation by unexpected touch, and to prevent the friction between the first and second grinding members 6, 71 and the particles to rotate the driving member 2 during grinding to change the gap "D", and to enhance the operational feature when rotating the driving member 2, In one preferable embodiment, the resilient member 4 includes at least one rib 41 which is formed with the shoulder 33 and made by resilient material. In order to make the at least one rib 41 to be easily compressed further, the skirt 32 has at least one slot 42 defined therethrough which is located corresponding to the at least one rib 41. The skirt 32 is made by resilient material. The restriction face 221 includes multiple teeth 2211, and the at least one rib 41 is engaged with the teeth 2211. The at least one rib 41 has two inclined faces 411 which extend outward from a peak of the at least one rib 41. When the users rotate the driving member 2, the teeth 2211 compress the at least one rib 41 and the at least one slot 42, so that the at least one rib 41 is partially merged into the at least one slot 42 as shown in Fig. 10. The at least one rib 41 includes two inclined faces 411 which guide the teeth 2211 to slide over the at least one rib 41 to compress the at least one rib 41 and the at least one slot 42 such that the driving member 2 is easily rotated. As shown in Fig. 11, when the at least one rib 41 is located between the teeth 2211, the at least one rib 41 bounces back and engaged between the teeth 2211. By this way, the users can feel that the status of the driving member 2 to acknowledge the relative positions between the first and second connection portions 34, 52. When the at least one rib 41 is located between the teeth 2211, and the shaft 7 is rotated as shown in Fig. 11, the friction between the first and second grinding members 6, 71 cannot overcome the resilient force of the resilient force of the at least one rib 41 and the at least one slot 42, and the friction between the at least one rib 41 and the teeth 2211, so that the driving member 2 does not rotate during the grinding process to change the gap "D".

While we have shown and described the embodiment in accordance with the present invention, it should be clear to those skilled in the art that further embodiments may be made without departing from the scope of the present invention.

## Claims

1. A grinding device comprising:
a body having a path defined axially therethrough;
a driving member having a hole defined in a first end thereof, a flange extending inward from an inner periphery of the hole and having a restriction face, at least one driving portion formed in the inner periphery of a second end of the driving member;
a fixing member fixed in the body and having at least one aperture which communicates with the path, the fixing member having a skirt which is located in the hole, a shoulder formed on a top of the skirt and having a resilient member connected thereto, the resilient member having resilient force in an axial direction thereof and contacting the restriction face, a first connection portion formed in an inner periphery of the skirt;
a driven member having a receiving hole defined therethrough, a second connection portion and an engaging portion respectively formed on an outside of the driven member, the second connection portion connected to the first connection portion, the engaging portion engaged with the at least one driving portion, at least one first grinding member located in the driven member, and
a shaft extending through the path, the hole, the aperture and the receiving hole, a second grinding member connected to a first end of the shaft which is located corresponding to the at least one first grinding member, a gap defined between the at least one first grinding member and the second grinding member, when the driving member is rotated, the driven member is co-rotated with the driving member to adjust a distance between the first and second connection members and to adjust the gap between the at least one first grinding member and the second grinding member.

2. The grinding device as claimed in claim 1, wherein the resilient member includes at least one rib which is formed with the shoulder and made by resilient material.

3. The grinding device as claimed in claim 2, wherein the skirt has at least one slot defined therethrough which is located corresponding to the at least one rib, the skirt is made by resilient material.

4. The grinding device as claimed in claim 2, wherein the restriction face includes multiple teeth, the at least one rib is engaged with the teeth, the at least one rib has two inclined faces which extend outward from a peak of the at least one rib.

5. The grinding device as claimed in claim 3, wherein the restriction face includes multiple teeth, the at least one rib is engaged with the teeth, the at least one rib has two inclined faces which extend outward from a peak of the at least one rib.

6. The grinding device as claimed in claim 1-5, wherein an inner diameter of the path is smaller than the hole of the driving member, an outer periphery of the fixing member is engaged with an inside of the path.

7. The grinding device as claimed in claim 1-5, wherein the fixing member is fixed to the inside of the path by way of heat melting.

8. The grinding device as claimed in claim 1-5, wherein the fixing member has an arm, a tube is connected to the arm and has a passage through which the shaft rotatably extends.

9. The grinding device as claimed in claim 8, wherein the second grinding member contacts one end of the tube.

10. The grinding device as claimed in claim 1, wherein the driving portion includes multiple faces to form a polygonal recess, the engaging portion is shaped to be engaged with the driving portion.

11. The grinding device as claimed in claim 10, wherein a length of each of the faces of the driving portion is longer than a thickness of the engaging portion.

12. The grinding device as claimed in claim 1-5, wherein the first and second connection members are threadedly connected to each other.

13. The grinding device as claimed in claim 1-5, wherein the shaft has a knob connected to a second end thereof, the knob is located on one end of the body.

## Amended claims

### Amended claims in accordance with Rule 137(2) EPC.

1. A grinding device comprising:
a body (1) having a path (11) defined axially therethrough;
a driving member (2) having a hole (21) defined in a first end thereof, a flange (22) extending inward from an inner periphery of the hole (21) and having a restriction face (221), at least one driving portion (23) formed in the inner periphery of a second end of the driving member (2);
a fixing member (3) fixed in the body (1) and having at least one aperture (31) which communicates with the path (11), the fixing member (3) having a skirt (32) which is located in the hole (21), a shoulder (33) formed on a top of the skirt (32) and having a resilient member (4) connected thereto, the resilient member (4) having resilient force in an axial direction thereof and contacting the restriction face (221), a first connection portion (34) formed in an inner periphery of the skirt (32); the resilient member (4) including at least one rib (41) which is formed with the shoulder (33) and made by resilient material, the skirt (32) having at least one slot (42) defined therethrough which is located corresponding to the at least one rib (41), the skirt (32) being made by resilient material, the restriction face (221) including multiple teeth (2211), the at least one rib (41) being engaged with the teeth (2211), the at least one rib (41) having two inclined faces (411) which extend outward from a peak of the at least one rib (41),
a driven member (4) having a receiving hole (21) defined therethrough, a second connection portion (52) and an engaging portion (53) respectively formed on an outside of the driven member (4), the second connection portion (52) connected to the first connection portion (34), the engaging portion (53) engaged with the at least one driving portion (23), at least one first grinding member (6) located in the driven member (4), and
a shaft (7) extending through the path (11), the hole (21), the aperture (31) and the receiving hole (21), a second grinding member (71) connected to a first end of the shaft (7) which is located corresponding to the at least one first grinding member (6), the second grinding member (71) is axially positioned by the fixing member, a gap defined between the at least one first grinding member (6) and the second grinding member (71), when the driving member (2) is rotated, the driven member (4) is co-rotated with the driving member (2) to adjust a distance between the first and second connection members and to adjust the gap between the at least one first grinding member (6) and the second grinding member (71).

2. The grinding device as claimed in claim 1, wherein an inner diameter of the path (11) is smaller than the hole (21) of the driving member (2), an outer periphery of the fixing member (3) is engaged with an inside of the path (11).

3. The grinding device as claimed in claim 1, wherein the fixing member (3) is fixed to the inside of the path (11) by way of heat melting.

4. The grinding device as claimed in claim 1, wherein the fixing member (3) has an arm, a tube (36) is connected to the arm and has a passage through which the shaft (7) rotatably extends.

5. The grinding device as claimed in claim 4, wherein the second grinding member (71) contacts one end of the tube (36).

6. The grinding device as claimed in claim 1, wherein the driving portion includes multiple faces to form a polygonal recess, the engaging portion (53) is shaped to be engaged with the driving portion (23).

7. The grinding device as claimed in claim 6, wherein a length of each of the faces of the driving portion (23) is longer than a thickness of the engaging portion (53).

8. The grinding device as claimed in claim 1, wherein the first and second connection members are threadedly connected to each other.

9. The grinding device as claimed in claim 1, wherein the shaft (7) has a knob (72) connected to a second end thereof, the knob (72) is located on one end of the body (1).
